# EUROPÄISCHE PATENTSCHRIFT

(11) **EP 0 658 605 B1**
(45) Veröffentlichungstag und Bekanntmachung des Hinweises auf die Patenterteilung: **30.01.2002**
(21) Anmeldenummer: 94810705.7
(22) Anmeldetag: 07.12.1994
(51) Int. Cl.: C09B 67/22, D06P 3/24, D06P 3/16

(54) **Verfahren zum Trichromie-Färben oder -Bedrucken**
Process of trichromic dyeing or printing
Procédé de teinture ou d'impression en trichromie

(30) Priorität: 16.12.1993 CH 376693
(43) Veröffentlichungstag der Anmeldung: 21.06.1995
(73) Patentinhaber: Ciba Specialty Chemicals Holding Inc., 4057 Basel (CH)
(72) Erfinder: Jordine, Guido, Dr., D-79098 Freiburg (DE); Adam, Jean-Marie, Dr., F-68300 Rosenau (FR)

(56) Entgegenhaltungen:
- EP-A- 0 387 201

## Beschreibung

Die vorliegende Erfindung betrifft ein Verfahren zum Trichromie-Färben oder -Bedrucken von natürlichen und synthetischen Polyamidfasermaterialien.

Die der vorliegenden Erfindung zugrundeliegende Aufgabe war es, ein Verfahren zum Färben oder Bedrucken von natürlichen und synthetischen Polyamidfasermaterialien mit zur Kombination nach dem Trichromie-Prinzip geeigneten Farbstoffen zu finden.

Aus der EP-A-0 387 201 ist eine Farbstoffmischung bekannt, die eine Mischung blaufärbenden Farbstoffe und einen rot- und einen gelb- oder orangefärbenden Farbstoff enthält und für ein Trichromieverfahren geeignet ist.

Es wurde nun gefunden, dass man diese Aufgabe erfindungsgemäss durch das nachfolgend beschriebene Verfahren lösen kann. Die so erhaltenen Färbungen genügen den gestellten Aufgaben. Insbesondere zeichnen sich die erhaltenen Färbungen durch einen gleichmässigen Farbaufbau bei gleichzeitiger Nuancenkonstanz in verschiedenen Konzentrationen und eine gute Kombinierbarkeit aus.

Gegenstand der vorliegenden Erfindung ist ein Verfahren zum Trichromie-Färben oder -Bedrucken von natürlichem oder synthetischem Polyamidfasermaterial, welches dadurch gekennzeichnet ist, dass man eine Farbstoffmischung von mindestens zwei gelb- oder orangefärbenden Farbstoffen der Formeln (6) und (8) 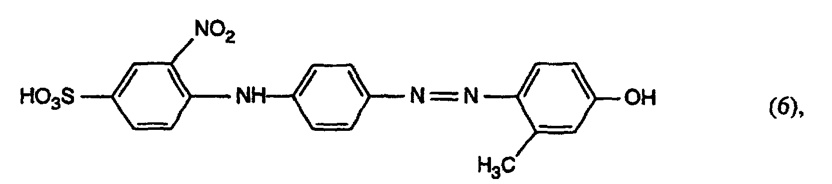 und 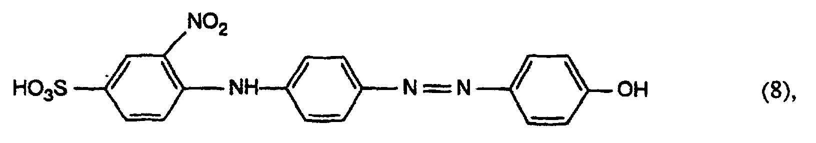 zusammen mit mindestens einem rotfärbenden Farbstoff der Formeln (2) und (3) 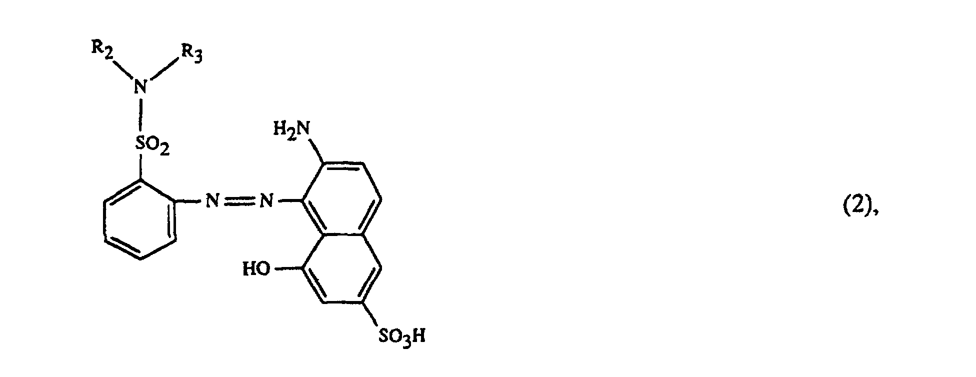 worin R₂ C₁-C₆-Alkyl, Phenyl oder Cyclohexyl und R₃ C₁-C₆-Alkyl ist, oder die Reste R₂ und R₃ zusammen mit dem sie verbindenden Stickstoffatom einen Azepinylring bilden, 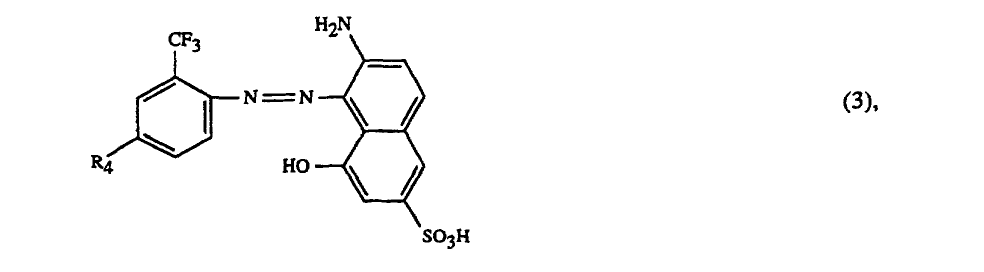 worin R₄ Wasserstoff, Halogen oder C₂-C₄-Alkanoylamino bedeutet;
und zusammen mit mindestens einem der blaufärbenden Farbstoffe der Formeln (4) und (5) 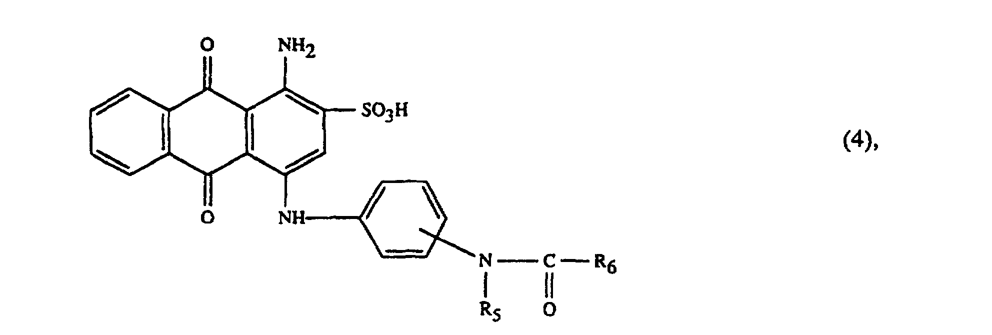 worin R₅ Wasserstoff oder C₁-C₄-Alkyl und R₆ C₁-C₄-Alkyl oder Amino ist, 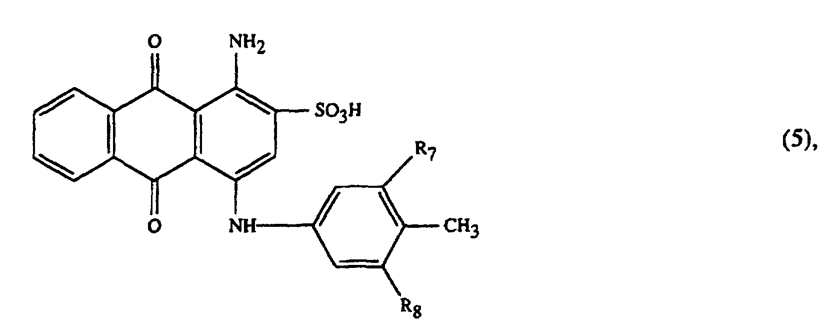 worin R₇ Wasserstoff oder Methyl ist und R₈ ein C₂₋₄-Hydroxyalkylsulphamoylrest ist; verwendet.

Unter Trichromie ist die additive Farbmischung passend gewählter gelb- bzw. orange-, rot- und blaufärbender Farbstoffe zu verstehen, mit denen jede gewünschte Nuance des sichtbaren Farbspektrums durch geeignete Wahl der Mengenverhältnisse der Farbstoffe eingestellt werden kann.

Als C₁-C₄-Alkyl kommen für R₅ und R₆ Methyl, Aethyl, Propyl, Isopropyl, Butyl, Isobutyl, sek.-Butyl oder tert.-Butyl in Betracht. Bevorzugt sind hierbei Methyl oder Aethyl, insbesondere Methyl.

Als C₁-C₆-Alkyl kommen für R₂ und R₃ z.B. Methyl, Aethyl, Propyl, Isopropyl, Butyl, Isobutyl, sek.-Butyl, tert.-Butyl oder geradkettiges oder verzweigtes Pentyl oder Hexyl in Betracht Bevorzugt sind Methyl und Aethyl sowie Reste der Formeln -(CH₂)₃-CH₃, -(CH₂)₄-CH₃, -CH(CH₃)-C₂H₅, -CH(CH₃)₂ sowie -CH₂-CH(CH₃)₂, insbesondere Methyl oder Aethyl und vorzugsweise Methyl.

Als C₂-C₄-Alkanoylamino kommt für R₄ z.B. Propionylamino oder insbesondere Acetylamino in Betracht.

Als Halogen kommen für R₄ beispielsweise Fluor oder Brom und insbesondere Chlor in Betracht.

Bilden die Reste R₂ und R₃ zusammen mit dem sie verbindenden Stickstoffatom einen Azepinylring so handelt es sich um den Rest der Formel

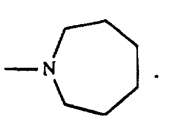

Als C₂₋₄-Hydroxyalkylsulphamoylrest kommt für R₈ insbesondere ein Rest der Formel -SO₂-NH-CH₂-CH₂-OH in Betracht.

Der Rest R₂ ist bevorzugt ein Rest der Formel -(CH₂)₃-CH₃, -(CH₂)₄-CH₃, -CH(CH₃)-C₂H₅, -CH(CH₃)₂ oder -CH₂-CH(CH₃)₂ oder insbesondere Phenyl oder Cyclohexyl. Vorzugsweise ist R₂ Cyclohexyl.

Der Rest R₃ ist bevorzugt Methyl oder Aethyl oder ein Rest der Formel -(CH₂)₃-CH₃, -(CH₂)₄-CH₃, -CH(CH₃)-C₂H₅, -CH(CH₃)₂ oder -CH₂-CH(CH₃)₂, insbesondere Methyl oder Aethyl. Vorzugsweise ist R₃ Methyl.

Weiterhin können die Reste R₂ und R₃ zusammen mit dem sie verbindenden Stickstoffatom einen Azepinylring bilden.

Der Rest R₄ ist bevorzugt Wasserstoff oder Chlor.

Der Rest R₅ ist bevorzugt Wasserstoff, Methyl oder Aethyl, insbesondere Wasserstoff.

Der Rest R₆ ist bevorzugt C₁-C₄-Alkyl, insbesondere Methyl oder Aethyl, vorzugsweise Methyl.

Der Rest R₇ ist bevorzugt Methyl.

Als rotfärbende Farbstoffe der Formel (2) verwendet man bevorzugt solche, worin R₂ ein Rest der Formel -(CH₂)₃-CH₃, -(CH₂)₄-CH₃, -CH(CH₃)-C₂H₅, -CH(CH₃)₂ oder -CH₂-CH(CH₃)₂ oder insbesondere Phenyl oder Cyclohexyl ist, R₃ Methyl oder Aethyl oder ein Rest der Formel -(CH₂)₃-CH₃, -(CH₂)₄-CH₃, -CH(CH₃)-C₂H₅, -CH(CH₃)₂ oder -CH₂-CH(CH₃)₂, insbesondere Methyl oder Aethyl, ist, oder die Reste R₂ und R₃ zusammen mit dem sie verbindenden Stickstoffatom einen Azepinylring bilden.

Besonders bevorzugt verwendet man als rotfärbende Farbstoffe der Formel (2) solche, worin R₂ Cyclohexyl und R₃ Methyl ist, oder die Reste R₂ und R₃ zusammen mit dem sie verbindenden Stickstoffatom einen Azepinylring bilden, insbesondere solche, worin R₂ Cyclohexyl und R₃ Methyl ist.

Als rotfärbende Farbstoffe verwendet man bevorzugt solche der Formel (2), für welche die oben angegebenen Bedeutungen und Bevorzugungen gelten.

Als blaufärbende Farbstoffe der Formel (4) verwendet man bevorzugt solche, worin der Rest der Formel -N(R₅)-CO-R₆ in meta- oder para-Stellung, insbesondere in meta-Stellung, relativ zur Aminogruppe, gebunden ist. Hierbei ist vorzugsweise R₅ Wasserstoff und R₆ Methyl oder Aethyl, insbesondere Methyl.

Als blaufärbende Farbstoffe der Formel (5) verwendet man bevorzugt solche, worin R₇ Methyl und R₈ ein Rest der Formel -SO₂-NH-CH₂-CH₂-OH ist.

Als blaufärbende Farbstoffe sind für das erfindungsgemässe Verfahren der Farbstoff der Formel (4) oder eine Mischung des Farbstoffs der Formel (4) mit einem Farbstoff der Formel (5) bevorzugt. Hierbei ist vorzugsweise R₅ Wasserstoff, R₆ Methyl oder Äthyl und R₈ ein Rest der Formel -SO₂-NH-CH₂-CH₂-OH.

Der Farbstoff der Formel (4) kann daher z.B. ohne gleichzeitige Anwesenheit des Farbstoffs der Formel (5) oder in Mischung mit dem Farbstoff der Formel (5) verwendet werden.

Als Mischungen der Farbstoffe der Formeln (4) und (5) kommen insbesondere solche in Betracht, worin R₅ Wasserstoff, R₆ Methyl oder insbesondere Äthyl, R₇ Methyl und R₈ ein Rest der Formel -SO₂-NH-CH₂-CH₂-OH ist.

Von Interesse sind ferner auch Mischungen von Farbstoffen der Formel (4), worin R₆ einen Alkylrest bedeutet.

Eine bevorzugte Ausführungsform des erfindungsgemässen Verfahren ist dadurch gekennzeichnet, dass man
als rotfärbenden Farbstoff einen Farbstoff der Formel (2) verwendet, worin R₂ Cyclohexyl und R₃ Methyl ist, oder die Reste R₂ und R₃ zusammen mit dem sie verbindenden Stickstoffatom einen Azepinylring bilden, und
als blaufärbenden Farbstoff einen Farbstoff der Formel (4) oder eine Mischung des Farbstoffs der Formel (4) mit einem Farbstoff der Formel (5) verwendet, wobei R₅ Wasserstoff, R₆ Methyl oder Äthyl und R₈ ein Rest der Formel -SO₂-NH-CH₂-CH₂-OH ist. Hierbei gelten für die blau- und rotfärbenden Farbstoffe die oben angegebenen Bedeutungen und Bevorzugungen.

Als blaufärbende Farbstoffe verwendet man besonders bevorzugt Mischungen, welche den Farbstoff der Formel (4) zusammen mit einem Farbstoff der Formel (5) enthalten, wobei R₅ Wasserstoff, R₆ Methyl oder insbesondere Äthyl, R₇ Methyl und R₈ ein Rest der Formel -SO₂-NH-CH₂-CH₂-OH ist.

Eine ganz besonders bevorzugte Ausführungsform des erfindungsgemässen Verfahrens ist dadurch gekennzeichnet, dass man ausser den Farbstoffen der Formeln (6) und (8) keinen weiteren gelb- oder orangefärbenden Farbstoff verwendet.

Einen weiteren Gegenstand der vorliegenden Erfindung stellen Farbstoffmischungen dar, welche eine Mischung gelb- oder orangefärbender Farbstoffe der Formeln (6) und (8) zusammen mit mindestens einem der rotfärbenden Farbstoffe der Formeln (2) und (3) und mindestens einem der blaufärbenden Farbstoffe der Formeln (4) und (5) enthalten. Hierbei gelten für die Farbstoffe der Formeln (2), (3), (4) und (5) die oben angegebenen Bedeutungen und Bevorzugungen.

Die weiteren in dem erfindungsgemässen Verfahren zum Trichromie-Färben oder -Bedrucken verwendeten Farbstoffe der Formeln (6), (8), (2), (3), (4) und (5) sind bekannt oder können in Analogie zu bekannten Farbstoffen hergestellt werden. So können Farbstoffe der Formeln (6) oder (8) z.B. gemäss den aus der US-A-4,060,383 und der GB-A-1,454,475 bekannten Verfahren erhalten werden.
Azofarbstoffe der Formel 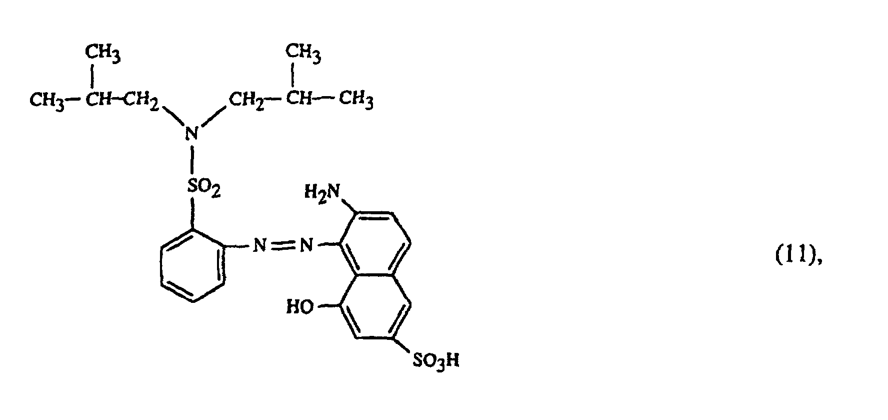 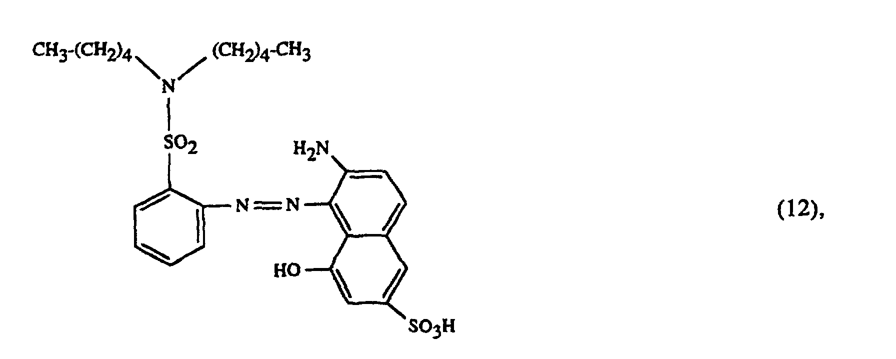 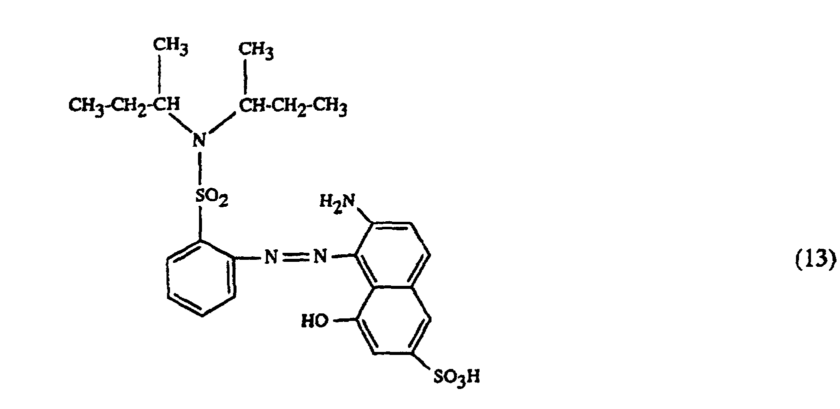 oder 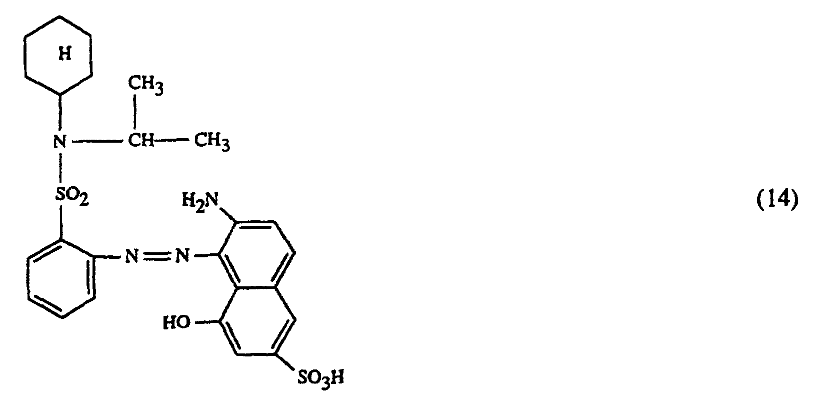 können z.B. so hergestellt werden, dass man eine Verbindung der Formel 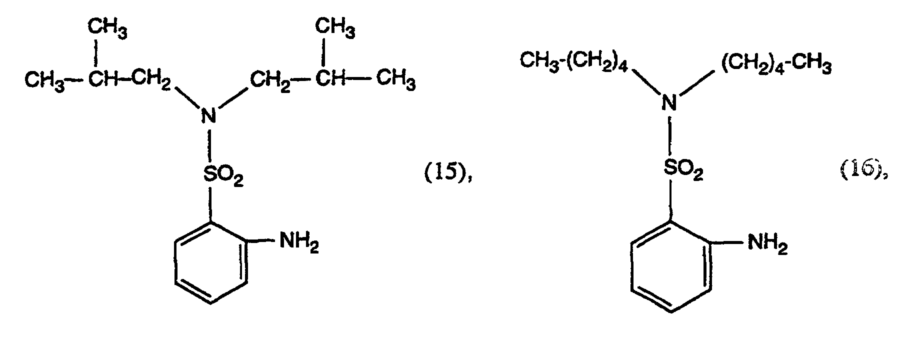 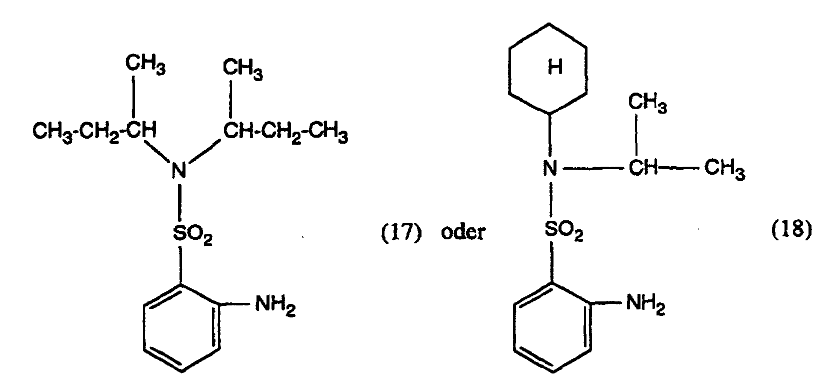 diazotiert und auf eine Kupplungskomponente der Formel 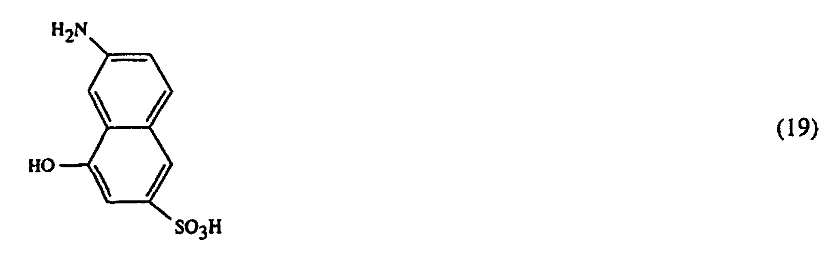 kuppelt.

Die Diazotierung der Verbindungen der Formeln (15) bis (18) erfolgt jeweils in an sich bekannter Weise, z.B. mit einem Nitrit, z.B. mit einem Alkalimetallnitrit wie Natriumnitrit, in einem mineralsauren Medium, z.B. in einem salzsauren Medium, bei Temperaturen von beispielsweise -5 bis 30°C und vorzugsweise bei 0 bis 10°C.

Die Kupplung auf die Kupplungskomponente der Formel (19) erfolgt jeweils in an sich bekannter Weise, bei sauren, neutralen bis alkalischen pH-Werten und Temperaturen von beispielsweise -5 bis 30°C, vorzugsweise 0 bis 25°C.

Die Verbindungen der Formeln (15) bis (18) sowie die Verbindung der Formel (19) sind bekannt oder können in Analogie zu bekannten Farbstoffen hergestellt werden. So können Verbindungen der Formeln (15) bis (18) durch Umsetzung einer Verbindung der Formel 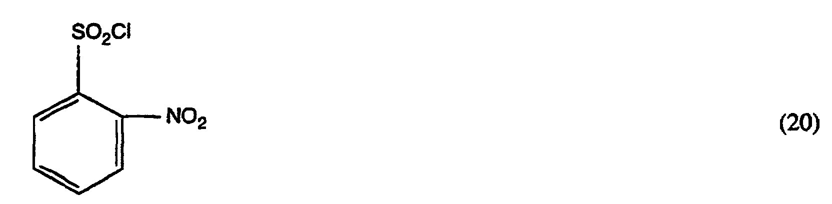 mit den entsprechenden Aminen und anschliessender Reduktion der Nitrogruppe zur Aminogruppe erhalten werden. Die Umsetzung der Verbindung der Formel (20) mit den Aminen sowie die anschliessende Reduktion der Nitrogruppe erfolgt in Analogie zu bekannten Verfahren.

Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die in dem erfindungsgemässen Verfahren verwendeten Farbstoffe können weitere Zusätze, wie z.B. Kochsalz oder Dextrin, enthalten.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist auch zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, guten Nuancenkonstanz auch in verschiedenen Konzentrationen, gute Echtheiten und Löslichkeit sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidmaterialien wie z.B. Wolle, wie insbesondere von synthetischen Polyamidmaterialien, wie z.B. Polyamid 6 oder Polyamid 6.6, und ist geeignet zum Färben oder Bedrucken von Woll- und synthetischem Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

Es werden egale Färbungen mit guten Allgemeinechtheiten, insbesondere guter Reib-, Nass-, Nassreib- und Lichtechtheit erhalten.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: Zu 2000 Teilen entmineralisiertem Wasser wird bei Raumtemperatur 1 Teil eines Egalisierhilfsmittels (basierend auf dem Kondensationsprodukt aus einem höheren aliphatischen Amin und Ethylenoxid) gegeben. Anschliessend wird das Bad mit Essigsäure auf einen pH-Wert von 6 gestellt. Dann gibt man eine Mischung von
0,11 Teilen eines Farbstoffs, der in Form der freien Säure der Verbindung der Formel 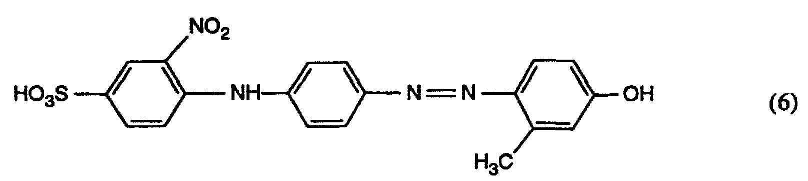 entspricht,
0,11 Teilen eines Farbstoffs, der in Form der freien Säure der Verbindung der Formel 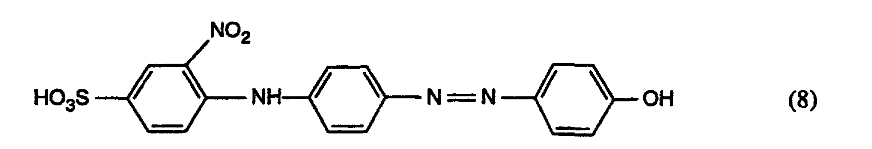 entspricht,
0,1 Teilen eines Farbstoffs, der in Form der freien Säure der Verbindung der Formel 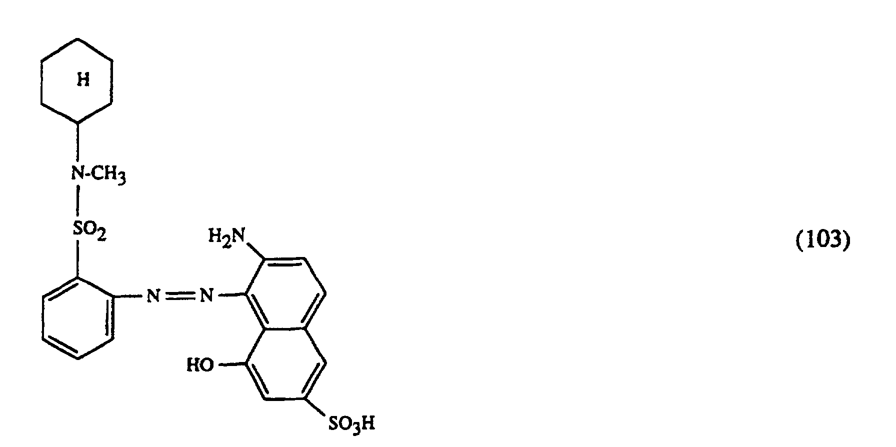 entspricht,
0,055 Teilen eines Farbstoffs, der in Form der freien Säure der Verbindung der Formel 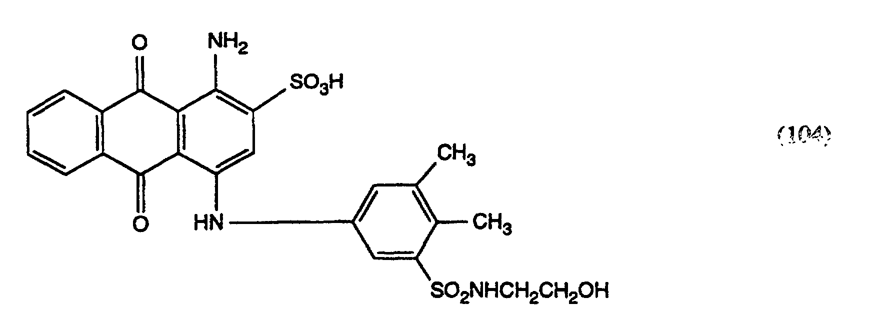 entspricht, und
0,055 Teilen eines Farbstoffs, der in Form der freien Säure der Verbindung der Formel 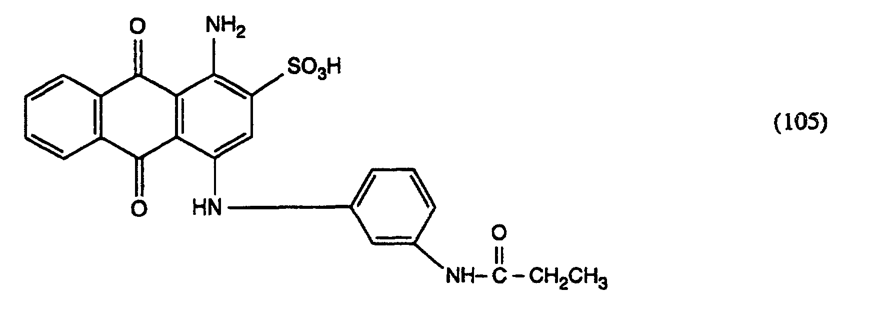 entspricht, zu. In die erhaltene Farbstofflösung geht man mit 100 Teilen Polyamid-6.6 Fasermaterial (Helancatrikot) ein und erwärmt das Färbebad innerhalb von 45 Minuten auf eine Temperatur von ca. 96°C. Man hält die Temperatur 45 bis 60 Minuten, kühlt anschliessend auf eine Temperatur von 70°C ab und entnimmt das Färbegut, welches mit Wasser gespült und anschliessend getrocknet wird. Man erhält ein in einem beige-braunen Farbton gefärbtes Gewebe.

Beispiele 2 bis 6: Verfährt man wie in Beispiel 1 angegeben, verwendet jedoch anstelle der blaufärbenden Farbstoffe der Formeln (104) und (105) einen der in der folgenden Tabelle 2 in Spalte 2 angegebenen blaufärbenden Farbstoffe, so erhält man ebenfalls in einem beige-braunen Farbton gefärbtes Polyamidgewebe. Jeder der in der folgenden Tabelle 2 angegebenen Farbstoffe wird in einer Menge von 0,11 Teilen, bezogen auf das zu färbende Fasermaterial, eingesetzt.

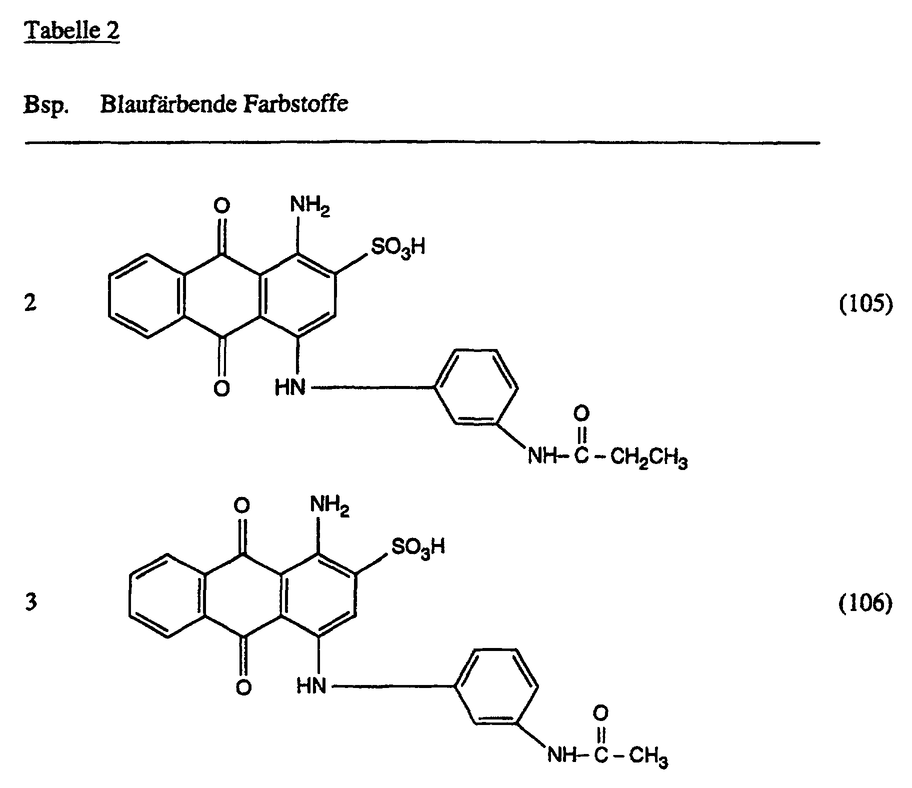

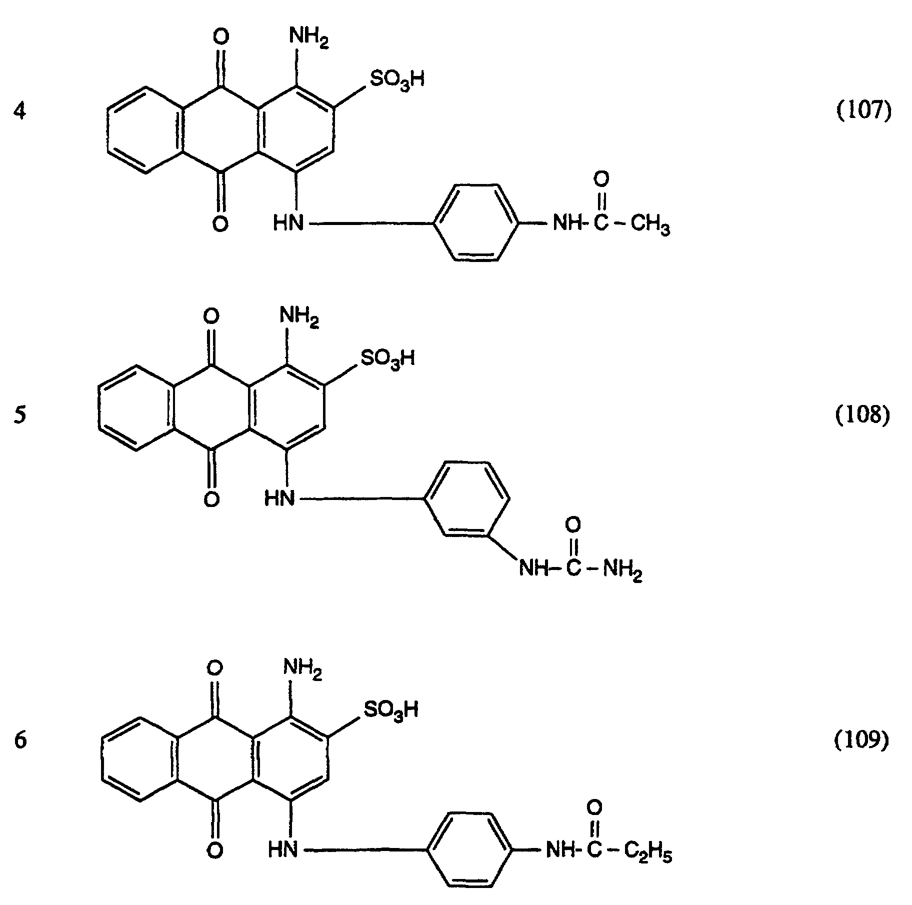

Beispiele 7 bis 17: Verfährt man wie in Beispiel 1 angegeben, verwendet jedoch anstelle des rotfärbenden Farbstoffs der Formel (103) einen der in der folgenden Tabelle 3 in Spalte 2 angegebenen rotfärbenden Farbstoffe, so erhält man ebenfalls in einem beige-braunen Farbton gefärbtes Polyamidgewebe. Jeder der in der folgenden Tabelle 3 angegebenen Farbstoffe wird in einer Menge von 0,1 Teilen, bezogen auf das zu färbende Fasernaterial, eingesetzt.

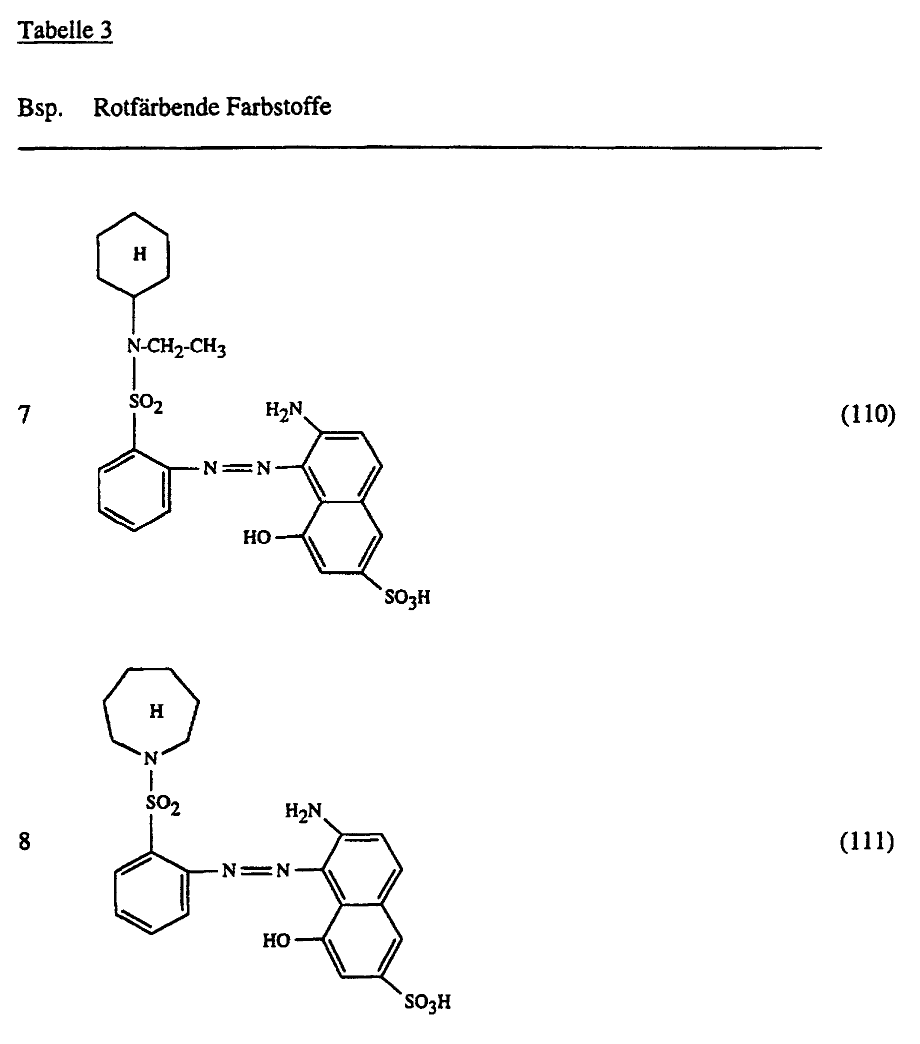

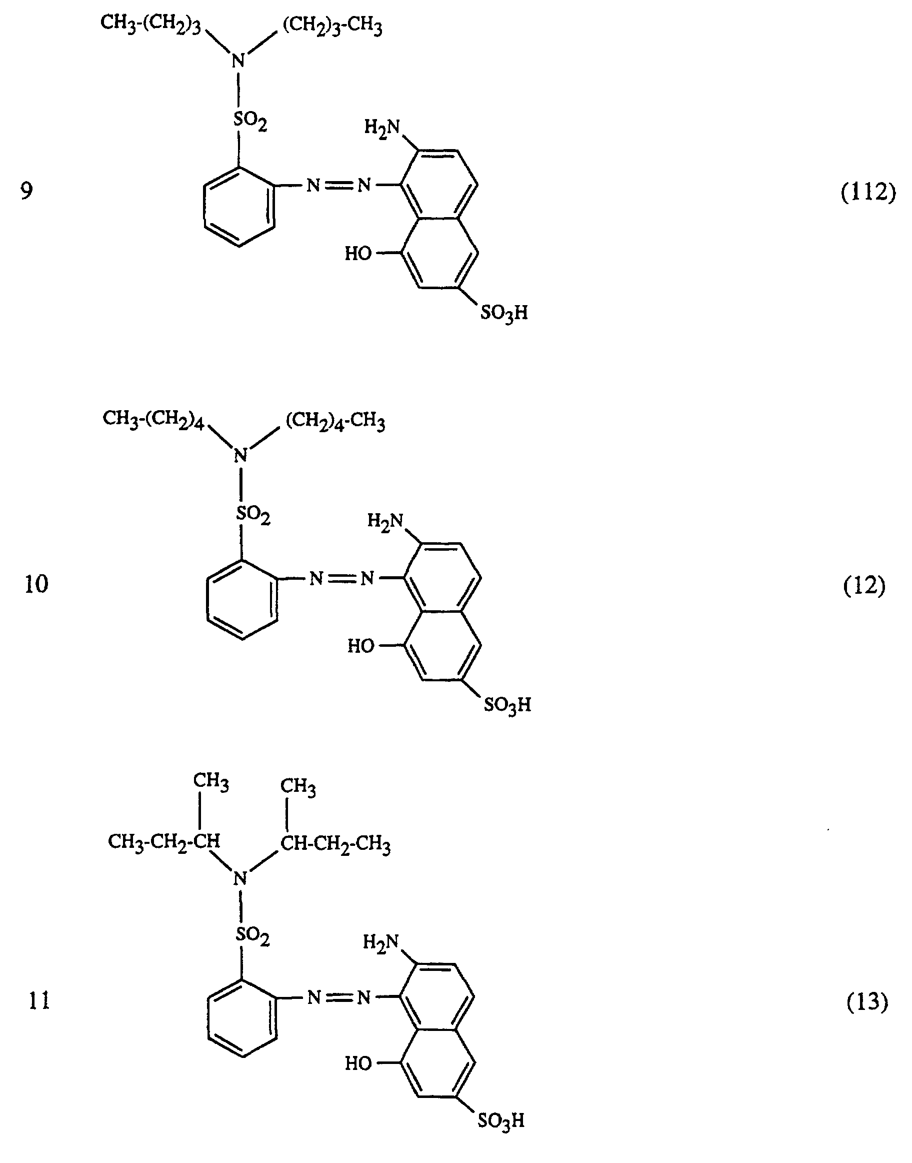

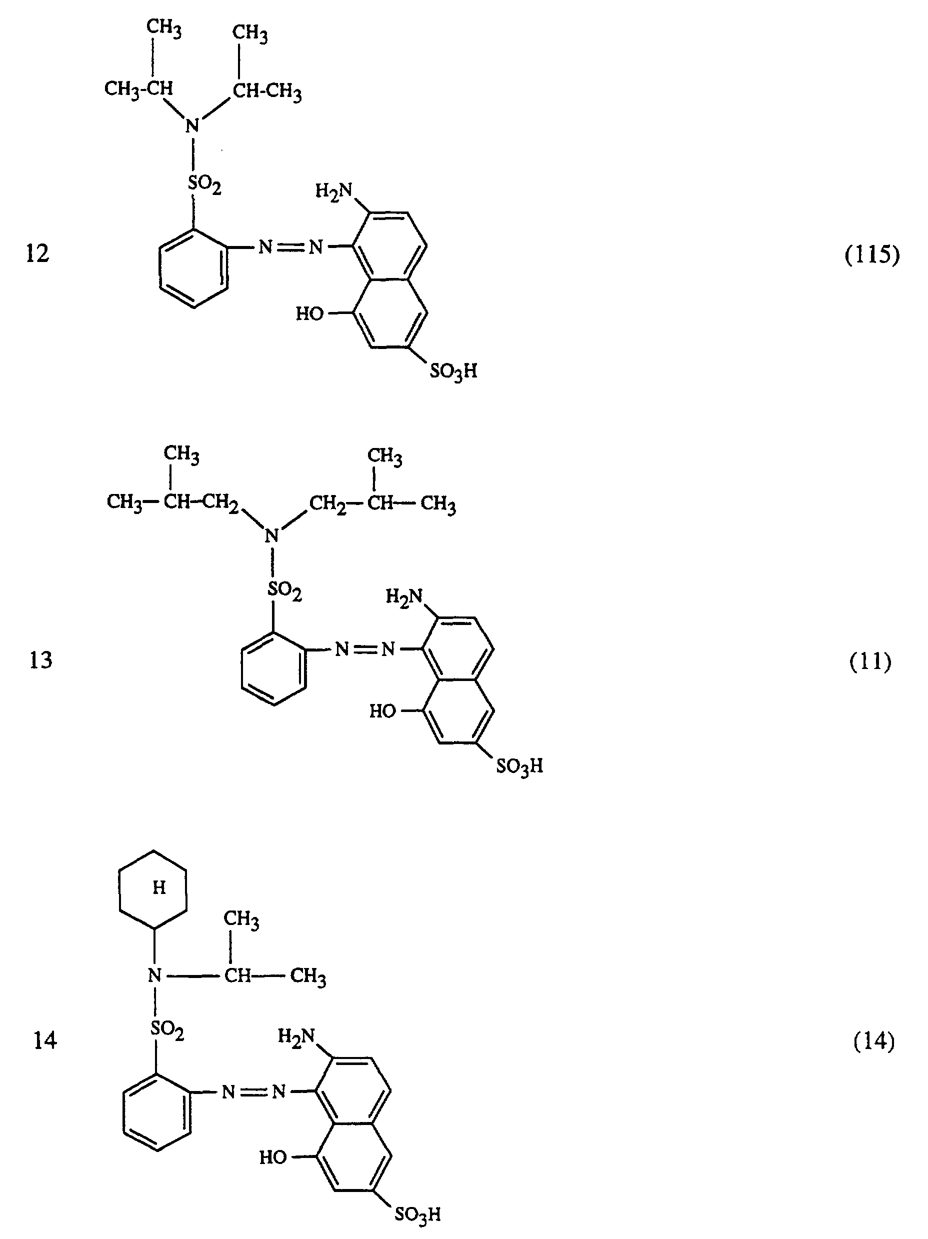

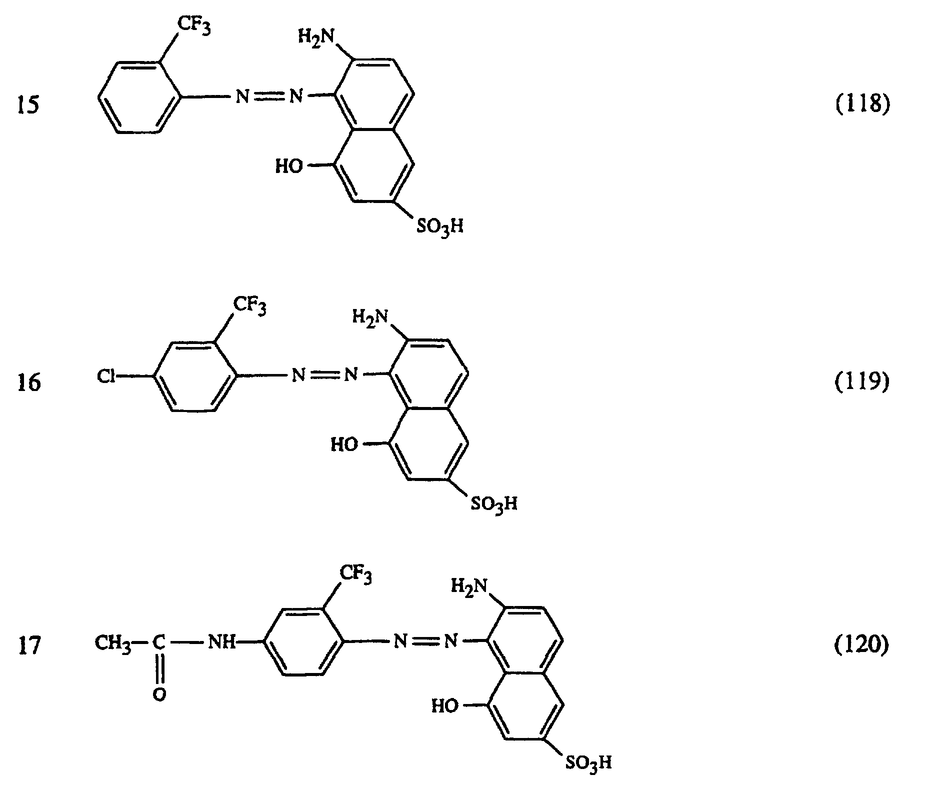

Beispiele 18 bis 72: Verfährt man wie in Beispiel 1 angegeben, verwendet jedoch anstelle des rotfärbenden Farbstoffs der Formel (103) und der blaufärbenden Farbstoffe der Formeln (104) und (105) die in der folgenden Tabelle 4 angegebenen rot- und blaufärbenden Farbstoffe, so erhält man ebenfalls in einem beige-braunen Farbton gefärbtes Polyamidgewebe. Die für die jeweiligen Farbstoffe in der Tabelle 4 angegebenen Mengen sind bezogen auf das zu färbende Fasermaterial.

**Tabelle 4**

| Bsp. | Rot- und blaufärbende Farbstoffe |
|---|---|
| 18 | 0,1 Teile des Farbstoffs der Formel (110) und 0,11 Teile des Farbstoffs der Formel (105) |
| | |
| 19 | 0,1 Teile des Farbstoffs der Formel (110) und 0,11 Teile des Farbstoffs der Formel (106) |
| | |
| 20 | 0,1 Teile des Farbstoffs der Formel (110) und 0,11 Teile des Farbstoffs der Formel (107) |
| | |
| 21 | 0,1 Teile des Farbstoffs der Formel (110) und 0,11 Teile des Farbstoffs der Formel (108) |
| | |
| 22 | 0,1 Teile des Farbstoffs der Formel (110) und 0,11 Teile des Farbstoffs der Formel (109) |
| | |
| 23 | 0,1 Teile des Farbstoffs der Formel (111) und 0,11 Teile des Farbstoffs der Formel (105) |
| | |
| 24 | 0,1 Teile des Farbstoffs der Formel (111) und 0,11 Teile des Farbstoffs der Formel (106) |
| | |
| 25 | 0,1 Teile des Farbstoffs der Formel (111) und 0,11 Teile des Farbstoffs der Formel (107) |
| | |
| 26 | 0,1 Teile des Farbstoffs der Formel (111) und 0,11 Teile des Farbstoffs der Formel (108) |
| | |
| 27 | 0,1 Teile des Farbstoffs der Formel (111) und 0,11 Teile des Farbstoffs der Formel (109) |
| | |
| 28 | 0,1 Teile des Farbstoffs der Formel (112) und 0,11 Teile des Farbstoffs der Formel (105) |
| | |
| 29 | 0,1 Teile des Farbstoffs der Formel (112) und 0,11 Teile des Farbstoffs der Formel (106) |
| | |
| 30 | 0,1 Teile des Farbstoffs der Formel (112) und 0,11 Teile des Farbstoffs der Formel (107) |
| | |
| 31 | 0,1 Teile des Farbstoffs der Formel (112) und 0,11 Teile des Farbstoffs der Formel (108) |
| | |
| 32 | 0,1 Teile des Farbstoffs der Formel (112) und 0,11 Teile des Farbstoffs der Formel (109) |
| | |
| 33 | 0,1 Teile des Farbstoffs der Formel (12) und 0,11 Teile des Farbstoffs der Formel (105) |
| | |
| 34 | 0,1 Teile des Farbstoffs der Formel (12) und 0,11 Teile des Farbstoffs der Formel (106) |
| | |
| 35 | 0,1 Teile des Farbstoffs der Formel (12) und 0,11 Teile des Farbstoffs der Formel (107) |
| | |
| 36 | 0,1 Teile des Farbstoffs der Formel (12) und 0,11 Teile des Farbstoffs der Formel (108) |
| | |
| 37 | 0,1 Teile des Farbstoffs der Formel (12) und 0,11 Teile des Farbstoffs der Formel (109) |
| | |
| 38 | 0,1 Teile des Farbstoffs der Formel (13) und 0,11 Teile des Farbstoffs der Formel (105) |
| | |
| 39 | 0,1 Teile des Farbstoffs der Formel (13) und 0,11 Teile des Farbstoffs der Formel (106) |
| | |
| 40 | 0,1 Teile des Farbstoffs der Formel (13) und 0,11 Teile des Farbstoffs der Formel (107) |
| | |
| 41 | 0,1 Teile des Farbstoffs der Formel (13) und 0,11 Teile des Farbstoffs der Formel (108) |
| | |
| 42 | 0,1 Teile des Farbstoffs der Formel (13) und 0,11 Teile des Farbstoffs der Formel (109) |
| | |
| 43 | 0,1 Teile des Farbstoffs der Formel (115) und 0,11 Teile des Farbstoffs der Formel (105) |
| | |
| 44 | 0,1 Teile des Farbstoffs der Formel (115) und 0,11 Teile des Farbstoffs der Formel (106) |
| | |
| 45 | 0,1 Teile des Farbstoffs der Formel (115) und 0,11 Teile des Farbstoffs der Formel (107) |
| | |
| 46 | 0,1 Teile des Farbstoffs der Formel (115) und 0,11 Teile des Farbstoffs der Formel (108) |
| | |
| 47 | 0,1 Teile des Farbstoffs der Formel (115) und 0,11 Teile des Farbstoffs der Formel (109) |
| | |
| 48 | 0,1 Teile des Farbstoffs der Formel (11) und 0,11 Teile des Farbstoffs der Formel (105) |
| | |
| 49 | 0,1 Teile des Farbstoffs der Formel (11) und 0,11 Teile des Farbstoffs der Formel (106) |
| | |
| 50 | 0,1 Teile des Farbstoffs der Formel (11) und 0,11 Teile des Farbstoffs der Formel (107) |
| | |
| 51 | 0,1 Teile des Farbstoffs der Formel (11) und 0,11 Teile des Farbstoffs der Formel (108) |
| | |
| 52 | 0,1 Teile des Farbstoffs der Formel (11) und 0,11 Teile des Farbstoffs der Formel (109) |
| | |
| 53 | 0,1 Teile des Farbstoffs der Formel (14) und 0,11 Teile des Farbstoffs der Formel (105) |
| | |
| 54 | 0,1 Teile des Farbstoffs der Formel (14) und 0,11 Teile des Farbstoffs der Formel (106) |
| | |
| 55 | 0,1 Teile des Farbstoffs der Formel (14) und 0,11 Teile des Farbstoffs der Formel (107) |
| | |
| 56 | 0,1 Teile des Farbstoffs der Formel (14) und 0,11 Teile des Farbstoffs der Formel (108) |
| | |
| 57 | 0,1 Teile des Farbstoffs der Formel (14) und 0,11 Teile des Farbstoffs der Formel (109) |
| | |
| 58 | 0,1 Teile des Farbstoffs der Formel (118) und 0,11 Teile des Farbstoffs der Formel (105) |
| | |
| 59 | 0,1 Teile des Farbstoffs der Formel (118) und 0,11 Teile des Farbstoffs der Formel (106) |
| | |
| 60 | 0,1 Teile des Farbstoffs der Formel (118) und 0,11 Teile des Farbstoffs der Formel (107) |
| | |
| 61 | 0,1 Teile des Farbstoffs der Formel (118) und 0,11 Teile des Farbstoffs der Formel (108) |
| | |
| 62 | 0,1 Teile des Farbstoffs der Formel (118) und 0,11 Teile des Farbstoffs der Formel (109) |
| | |
| 63 | 0,1 Teile des Farbstoffs der Formel (119) und 0,11 Teile des Farbstoffs der Formel (105) |
| | |
| 64 | 0,1 Teile des Farbstoffs der Formel (119) und 0,11 Teile des Farbstoffs der Formel (106) |
| | |
| 65 | 0,1 Teile des Farbstoffs der Formel (119) und 0,11 Teile des Farbstoffs der Formel (107) |
| | |
| 66 | 0,1 Teile des Farbstoffs der Formel (119) und 0,11 Teile des Farbstoffs der Formel (108) |
| | |
| 67 | 0,1 Teile des Farbstoffs der Formel (119) und 0,11 Teile des Farbstoffs der Formel (109) |
| | |
| 68 | 0,1 Teile des Farbstoffs der Formel (120) und 0,11 Teile des Farbstoffs der Formel (105) |
| | |
| 69 | 0,1 Teile des Farbstoffs der Formel (120) und 0,11 Teile des Farbstoffs der Formel (106) |
| | |
| 70 | 0,1 Teile des Farbstoffs der Formel (120) und 0,11 Teile des Farbstoffs der Formel (107) |
| | |
| 71 | 0,1 Teile des Farbstoffs der Formel (120) und 0,11 Teile des Farbstoffs der Formel (108) |
| | |
| 72 | 0,1 Teile des Farbstoffs der Formel (120) und 0,11 Teile des Farbstoffs der Formel (109) |

Beispiel 73: 1,3 Teile Düsobutylamin werden in 40 Teilen Aceton gelöst und mit einem Teil Triethylamin versetzt. Zu dieser Lösung werden 2,3 Teile 2-Nitrobenzol-1-sulfochlorid, gelöst in 10 Teilen Aceton, zugetropft und anschliessend die Lösung auf Rückfluss erwärmt. Nach beendeter Reaktion wird das Reaktionsgemisch auf Raumtemperatur abgekühlt und das Lösungsmittel am Rotationsverdampfer entfernt. Der Rückstand wird mit Wasser versetzt, der ausfallende Niederschlag abgenutscht und mit Wasser gewaschen. Das Produkt wird bei 50°C im Vakuum getrocknet. Man erhält eine Verbindung der Formel 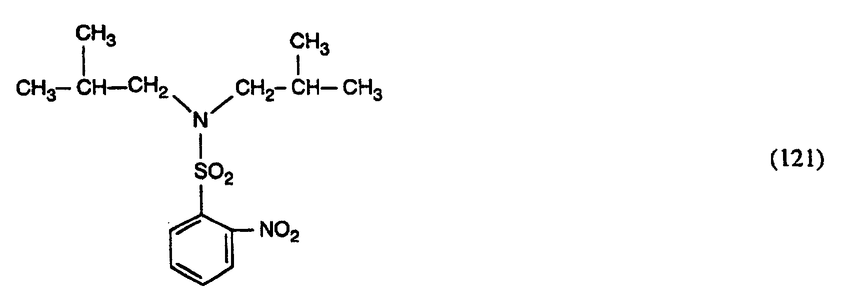 in guter Ausbeute und Reinheit.

62,4 Teile der Verbindung der Formel (121) werden in 1360 Teilen Methanol gelöst und in Anwesenheit von 6,7 Teilen Raney-Nickel bei 60°C und einem Druck von 40 bar hydriert. Das Raney-Nickel wird abfiltriert und das Filtrat am Rotationsverdampfer eingeengt. Man erhält eine Verbindung der Formel 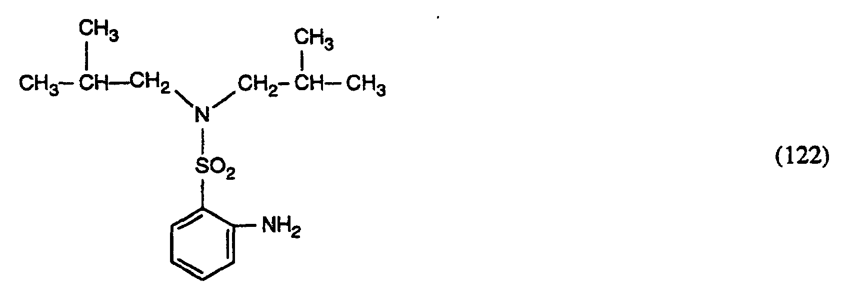 in guter Ausbeute und Reinheit.

2,8 Teile der Verbindung der Formel (122) werden in 10 Teilen Sulfolan gelöst und dann auf 10°C gekühlt. Anschliessend gibt man langsam 3,3 Teile Nitrosylschwefelsäure (40%) zu und rührt eine Stunde bei 10°C. Man korrigiert den Nirtritüberschuss durch Zugabe von Sulfaminsäure, tropft dann eine Lösung, welche 2,6 Teile Gamma-Säure in 10 Teilen Wasser enthält und durch Zugabe von Natronlauge auf einen pH-Wert von 7 gestellt ist, zu und rührt bis keine Diazoverbindung mehr nachweisbar ist. Anschliessend versetzt man mit 50 Teilen Salzsäure (32%), wobei ein Niederschlag ausfällt. Der Niederschlag wird abgenutscht, nochmals mit 200 Teilen Wasser verrührt, mit 2-normaler Natronlauge auf pH 7 gestellt und nach Zugabe von 3 Volumenprozent Natriumchlorid abgenutscht. Nach Trocknen bei 60°C im Vakuum erhält man einen Farbstoff, der in Form der freien Säure der Verbindung der Formel 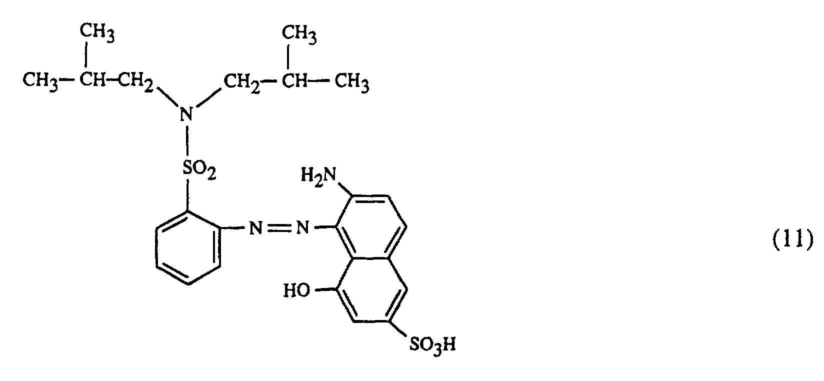 entspricht.

In analoger Weise zu den Angaben in Beispiel 73 können die in Form der freien Säuren angegebenen Farbstoffe der Formeln 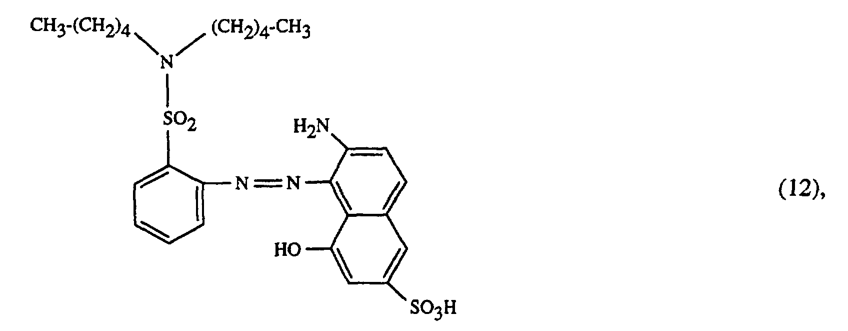 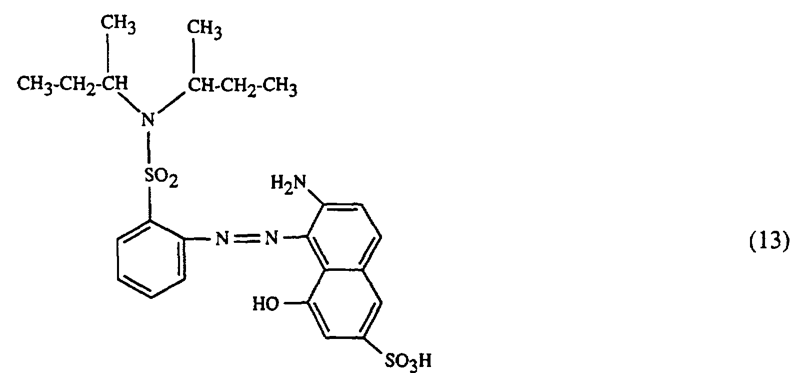 und 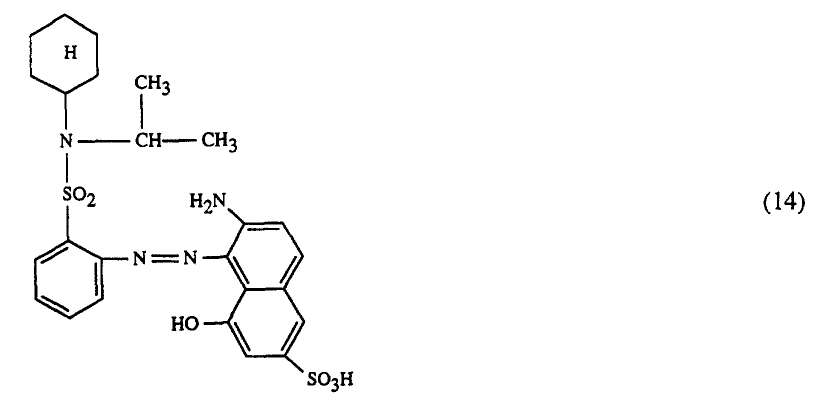 erhalten werden.

## Patentansprüche

1. Verfahren zum Trichromie-Färben oder -Bedrucken von natürlichem oder synthetischem Polyamidfasermaterial, **dadurch gekennzeichnet, dass** man eine Farbstoffmischung von zwei gelb- oder orangefärbenden Farbstoffen der Formeln 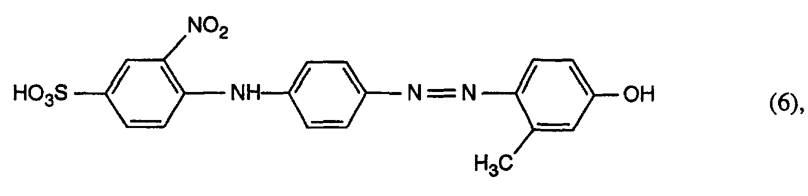 und 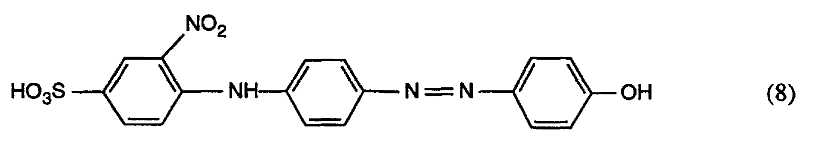 zusammen mit mindestens einem rotfärbenden Farbstoff der Formeln (2) und (3) 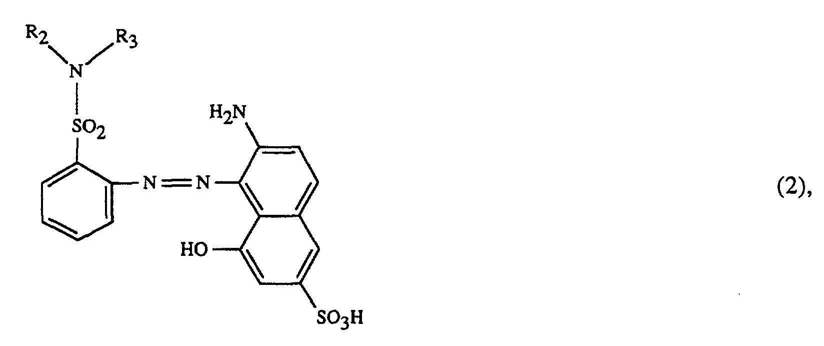 worin R₂ C₁-C₆-Alkyl, Phenyl oder Cyclohexyl und R₃ C₁-C₆-Alkyl ist, oder die Reste R₂ und R₃ zusammen mit dem sie verbindenden Stickstoffatom einen Perhydroazepinylring der Formel 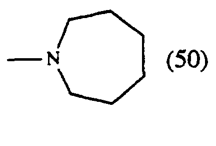 bilden, 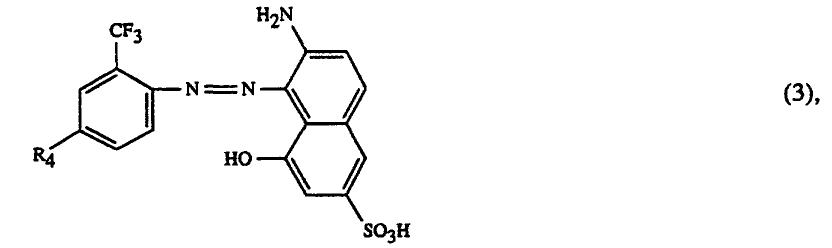 worin R₄ Wasserstoff, Halogen oder C₂-C₄-Alkanoylamino bedeutet; und zusammen mit mindestens einem der blaufärbenden Farbstoffe der Formeln (4) und (5) 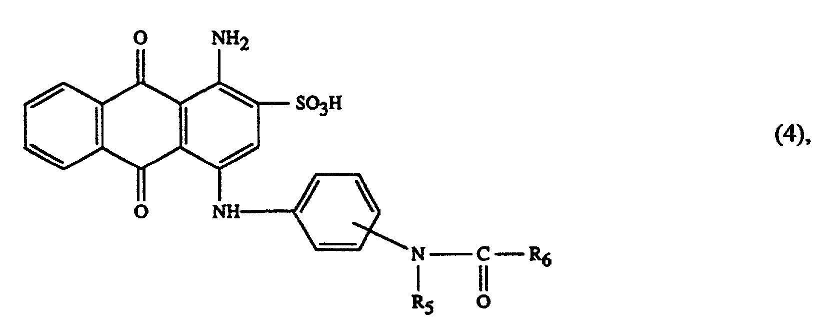 worin R₅ Wasserstoff oder C₁-C₄-Alkyl und R₆ C₁-C₄-Alkyl oder Amino ist, 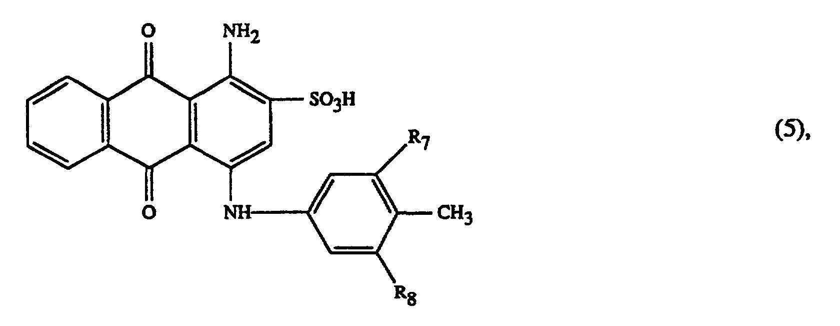 worin R₇ Wasserstoff oder Methyl ist und R₈ ein C₂₋₄-Hydroxyalkylsulphamoylrest ist; verwendet.

2. Verfahren gemäss Anspruch 1, **dadurch gekennzeichnet, dass** man als rotfärbenden Farbstoff einen Farbstoff der Formel (2) verwendet, worin R₂ Cyclohexyl und R₃ Methyl ist, oder die Reste R₂ und R₃ zusammen mit dem sie verbindenden Stickstoffatom einen Perhydroazepinylring der Formel (50) bilden.

3. Verfahren gemäss Anspruch 1, **dadurch gekennzeichnet, dass** man als blaufärbenden Farbstoff einen Farbstoff der Formel (4) oder eine Mischung des Farbstoffs der Formel (4) mit einem Farbstoff der Formel (5) verwendet, wobei R₅ Wasserstoff, R₆ Methyl oder Äthyl und R₈ ein Rest der Formel -SO₂-NH-CH₂-CH₂-OH ist.

4. Verfahren gemäss Anspruch 1, **dadurch gekennzeichnet, dass** man als Farbstoffmischung gelb- oder orangefärbender Farbstoffe eine Mischung verwendet, welche den Farbstoff der Formel 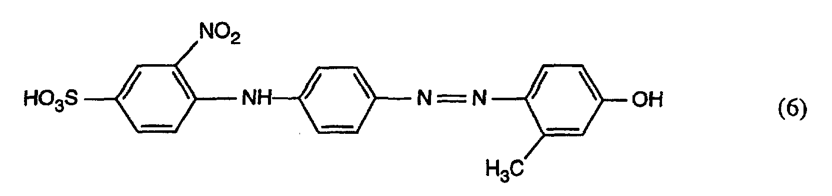 zusammen mit einem Farbstoff der Formel 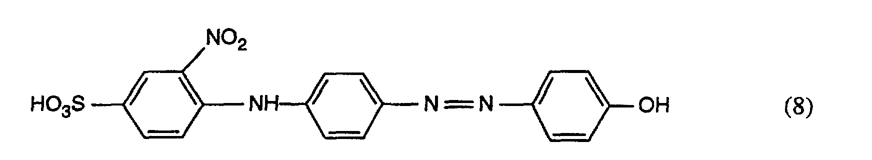 enthält,
als rotfärbenden Farbstoff einen Farbstoff der Formel (2) verwendet, worin R₂ Cyclohexyl und R₃ Methyl ist, oder die Reste R₂ und R₃ zusammen mit dem sie verbindenden Stickstoffatom einen Azepinylring der Formel (50) bilden, und
als blaufärbenden Farbstoff einen Farbstoff der Formel (4) oder eine Mischung des Farbstoffs der Formel (4) mit einem Farbstoff der Formel (5) verwendet, wobei R₅ Wasserstoff, R₆ Methyl oder Äthyl und R₈ ein Rest der Formel -SO₂-NH-CH₂-CH₂-OH ist.

5. Verfahren gemäss einem der Ansprüche 1 bis 4, **dadurch gekennzeichnet, dass** man als rotfärbenden Farbstoff einen Farbstoff der Formel (2) verwendet, worin R₂ Cyclohexyl und R₃ Methyl ist.

6. Verfahren gemäss einem der Ansprüche 1 bis 4, **dadurch gekennzeichnet, dass** man als blaufärbende Farbstoffe eine Mischung verwendet, welche den Farbstoff der Formel (4) zusammen mit einem Farbstoff der Formel (5) enthält, wobei R₅ Wasserstoff, R₆ Methyl oder insbesondere Äthyl, R₇ Methyl und R₈ ein Rest der Formel -SO₂-NH-CH₂-CH₂-OH ist.

7. Verfahren gemäss einem der Ansprüche 1 bis 6, **dadurch gekennzeichnet, dass** man ausser den Farbstoffen der Formeln (6) und (8) keinen weiteren gelb- oder orangefärbenden Farbstoff verwendet.

8. Verfahren gemäss einem der Ansprüche 1 bis 7, **dadurch gekennzeichnet, dass** man Wolle oder synthetisches Polyamidfasermaterial färbt oder bedruckt.

9. Verfahren gemäss Anspruch 8, **dadurch gekennzeichnet, dass** man synthetisches Polyamidfasermaterial färbt oder bedruckt.

## Claims

1. A process for dyeing or printing natural or synthetic polyamide fibre material by the trichromatic technique, which comprises using a dye mixture of at least two yellow- or orange-dyeing dyes of formulae 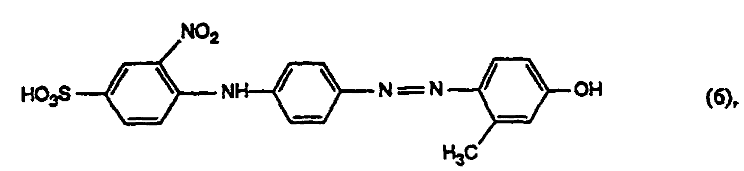 and 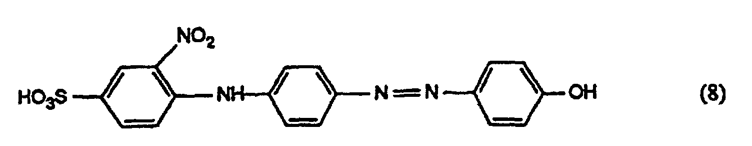 together with at least one red-dyeing dye of formulae (2) and (3) 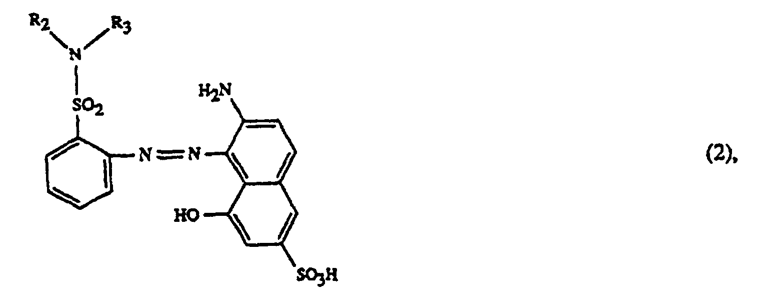 in which R₂ is C₁-C₆alkyl, phenyl or cyclohexyl and R₃ is C₁-C₆alkyl, or the radicals R₂ and R₃, together with the nitrogen atom linking them, form a perhydroazepinyl ring of formula 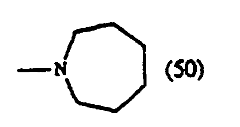 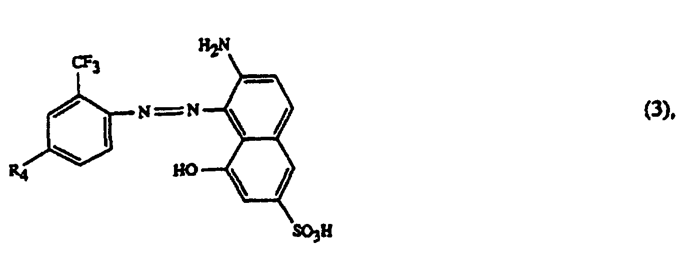 in which R₄ is hydrogen, halogen or C₂-C₄alkanoylamino; and together with at least one of the blue-dyeing dyes of formulae (4) and (5) 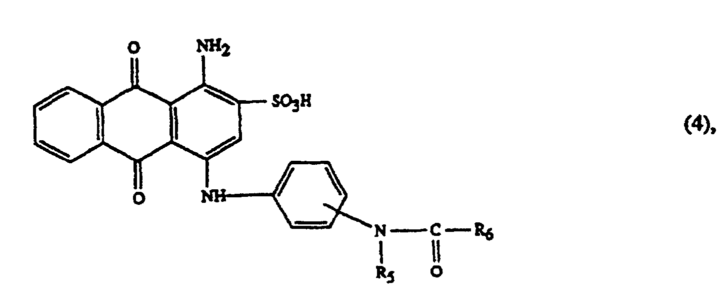 in which R₅ is hydrogen or C₁-C₄alkyl and R₆ is C₁-C₄alkyl or amino, 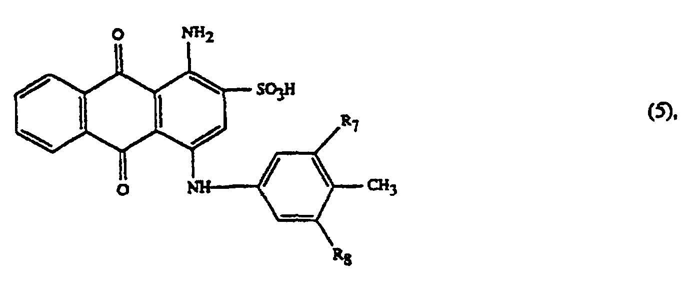 in which R₇ is hydrogen or methyl and R₈ is a C₂₋₄ hydroxyalkylsulfamoyl radical.

2. A process according to claim 1, wherein a red-dyeing dye used is a dye of formula (2) in which R₂ is cyclohexyl and R₃ is methyl, or the radicals R₂ and R₃, together with the nitrogen atom linking them, form a perhydroazepinyl ring of formula (50).

3. A process according to claim 1, wherein a blue-dyeing dye used is a dye of formula (4) or a mixture of the dye of formula (4) with a dye of formula (5), where R₅ is hydrogen, R₆ is methyl or ethyl and R₈ is a radical of formula -SO₂-NH-CH₂-CH₂-OH.

4. A process according to claim 1, wherein a dye mixture of yellow- or orange-dyeing dyes that is used is a mixture comprising the dye of formula 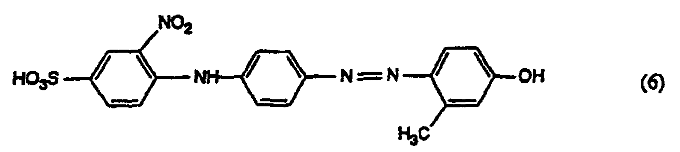 together with a dye of formula 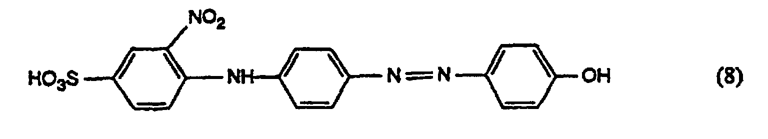 and a red-dyeing dye used is a dye of formula (2) in which R₂ is cyclohexyl and R₃ is methyl,
or the radicals R₂ and R₃, together with the nitrogen atom linking them, form an azepinyl ring of formula (50), and a blue-dyeing dye used is a dye of formula (4) or a mixture of the dye of formula (4) with a dye of formula (5) where R₅ is hydrogen, R₆ is methyl or ethyl and R₈ is a radical of formula -SO₂-NH-CH₂-CH₂-OH.

5. A process according to any one of claims 1 to 4, wherein a red-dyeing dye used is a dye of formula (2) in which R₂ is cyclohexyl and R₃ is methyl.

6. A process according to any one of claims 1 to 4, wherein blue-dyeing dyes used comprise a mixture comprising the dye of formula (4) together with a dye of formula (5), where R₅ is hydrogen, R₆ is methyl or, preferably, ethyl, R₇ is methyl and R₈ is a radical of formula -SO₂-NH-CH₂-CH₂-OH.

7. A process according to any one of claims 1 to 6, which comprises not using an additional yellow- or orange-dyeing dye besides the dyes of formulae (6) and (8).

8. A process according to any one of claims 1 to 7, wherein wool or synthetic polyamide fibre material is dyed or printed.

9. A process according to claim 8, wherein synthetic polyamide fibre material is dyed or printed.

## Revendications

1. Procédé de teinture ou d'impression en trichromie de matériau naturel ou synthétique en fibres de polyamide, **caractérisé en ce qu'**on utilise un mélange de colorants de deux colorants de teinte jaune ou orange des formules 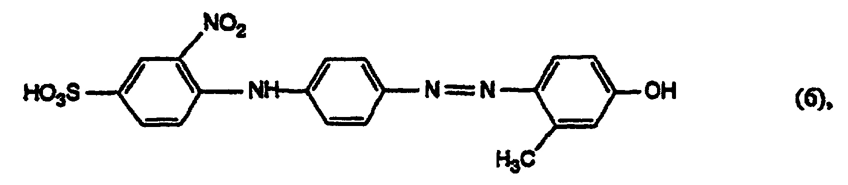 et 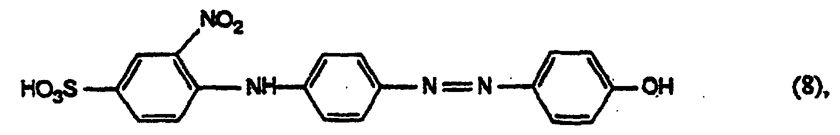 en même temps avec au moins un colorant de teinte rouge des formules (2) et (3) 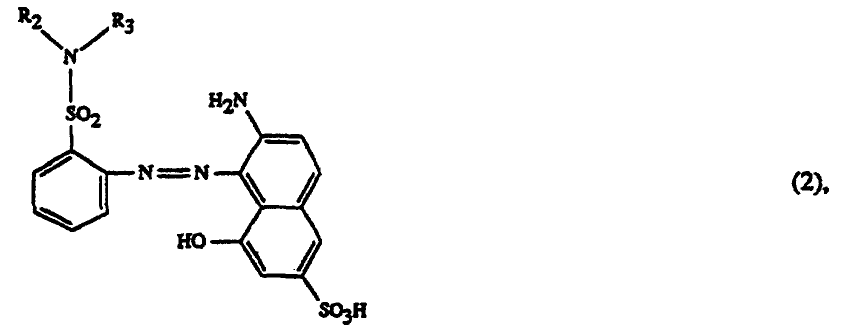 dans laquelle R₂ est un groupe alkyle en C₁ à C₆, phényle ou cyclohexyle et R₃ est un groupe alkyle en C₁ à C₆, ou les groupes R₂ et R₃ forment ensemble avec l'atome d'azote auquel ils sont liés un cycle perhydroazépinyle de formule 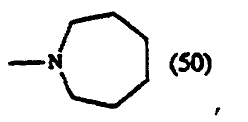 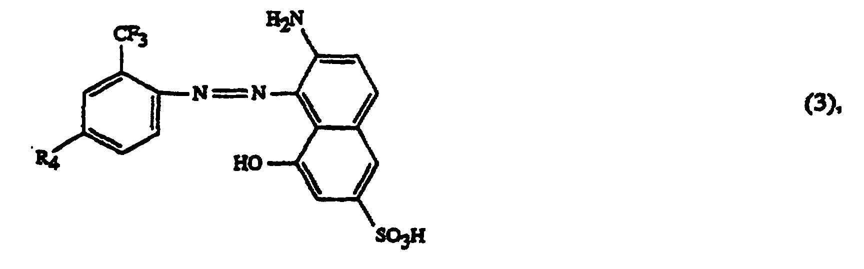 dans laquelle R₄ représente un atome d'hydrogène, d'halogène ou un groupe alcanoylamino en C₂ à C₄ ;
et ensemble avec au moins un des colorants de teinte bleue des formules (4) et (5) 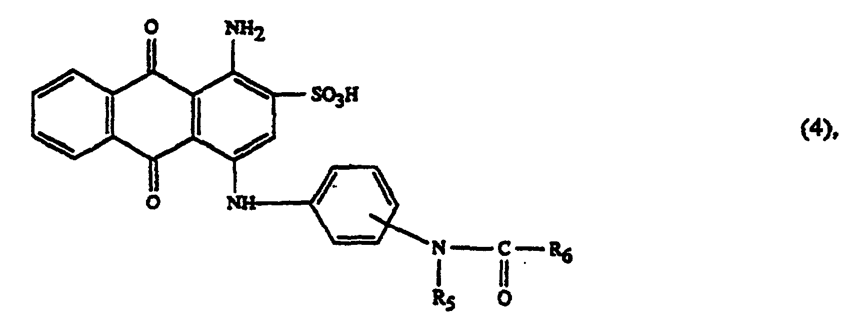 dans laquelle R₅ représente un atome d'hydrogène ou un groupe alkyle en C₁ à C₄ et R₆ est un groupe alkyle en C₁ à C₄ ou amino, 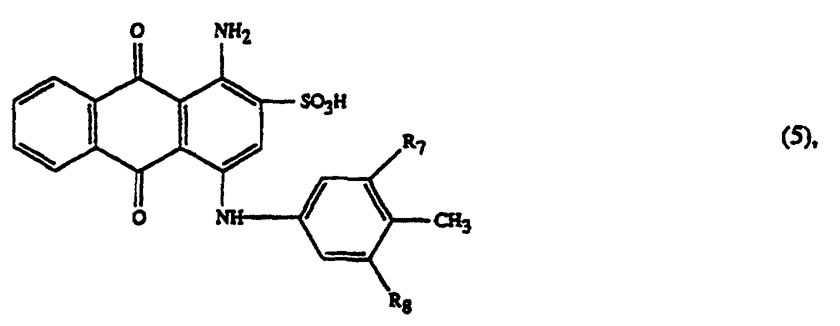 dans laquelle R₇ est un atome d'hydrogène ou un groupe méthyle et R₈ est un groupe hydroxyalkylsulfamoyle en C₂ à C₄.

2. Procédé selon la revendication 1, **caractérisé en ce qu'**on utilise comme colorant de couleur rouge un colorant de formule (2), dans laquelle R₂ est un groupe cyclohexyle et R₃ un groupe méthyle, ou les groupes R₂ et R₃ forment ensemble avec l'atome d'azote auquel ils sont liés un cycle perhydroazépinyle de formule (50).

3. Procédé selon la revendication 1, **caractérisé en ce qu'**on utilise comme colorant de couleur bleue un colorant de formule (4) ou un mélange du colorant de formule (4) avec un colorant de formule (5), dans laquelle R₅ est un atome d'hydrogène, R₆ un groupe méthyle ou éthyle et R₈ un groupe de formule -SO₂-NH-CH₂-CH₂-OH.

4. Procédé selon la revendication 1, **caractérisé en ce qu'**on utilise comme mélange de colorants de teinte jaune ou orange un mélange, qui contient le colorant de formule 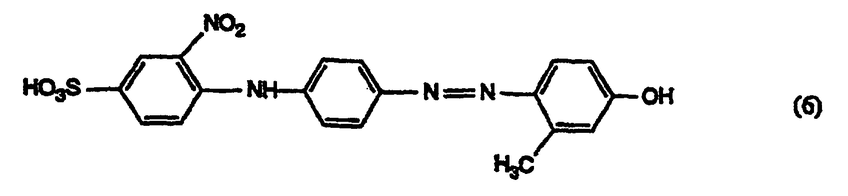 en même temps avec un colorant de formule 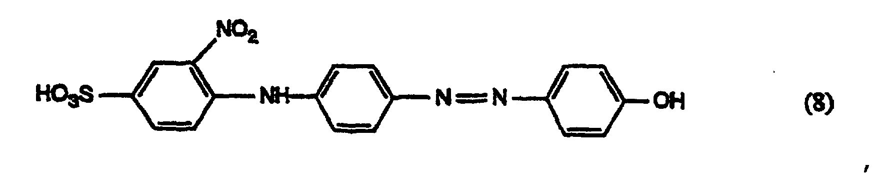 on utilise comme colorant de teinte rouge un colorant de formule (2), dans laquelle R₂ est un groupe cyclohexyle et R₃ un groupe méthyle, ou les groupes R₂ et R₃ forment ensemble avec l'atome d'azote auquel ils sont liés un cycle azépinyle de formule (50), et
on utilise comme colorant de teinte bleue un colorant de formule (4) ou un mélange du colorant de formule (4) avec un colorant de formule (5), dans laquelle R₅ est un atome d'hydrogène, R₆ un groupe méthyle ou éthyle et R₈ un groupe de formule -SO₂-NH-CH₂-CH₂-OH.

5. Procédé selon l'une des revendications 1 à 4, **caractérisé en ce qu'**on utilise comme colorant de teinte rouge un colorant de formule (2), dans laquelle R₂ est un groupe cyclohexyle et R₃ un groupe méthyle.

6. Procédé selon l'une des revendications 1 à 4, **caractérisé en ce qu'**on utilise comme colorant de teinte bleue un mélange, qui contient le colorant de formule (4) en même temps avec un colorant de formule (5), dans laquelle R₅ est un atome d'hydrogène, R₆ un groupe méthyle ou en particulier éthyle, R₇ est un groupe méthyle et R₈ un groupe de formule -SO₂-NH-CH₂-CH₂-OH.

7. Procédé selon l'une des revendications 1 à 6, **caractérisé en ce qu'**on n'utilise pas, en plus des colorants des formules (6) et (8), d'autre colorant de teinte jaune ou orange.

8. Procédé selon l'une des revendications 1 à 7, **caractérisé en ce qu'**on teinte ou on imprime de la laine ou un matériau polyamide synthétique en fibres.

9. Procédé selon la revendication 8, **caractérisé en ce qu'**on teinte ou on imprime un matériau polyamide synthétique en fibres.
